# EUROPEAN PATENT APPLICATION

(11) **EP 1 372 023 A2**
(43) Date of publication of application: **17.12.2003**
(21) Application number: 03013116.3
(22) Date of filing: 11.06.2003
(51) Int. Cl.: G02F 1/133, B60K 37/00

(54) **Electro-optically concealable vehicle instrument panel and method of constructing the same**

(30) Priority: 13.06.2002 IT MI20021307
(71) Applicant: Ergom Automotive S.p.a., 10071 Borgaro Torinese (Torino) (IT)
(72) Inventor: Hakemi, Hassan-Ali, 20058 Villasanta (Milano) (IT); Caporusso, Martino, 38060 Nogaredo (Trento) (IT)
(74) Representative: Forattini, Amelia

(57) **Abstract**

An instrument panel of a vehicle provided with a rigid front cover panel for protecting the underlying instruments; the cover panel is electro-optical and includes: two transparent conductive layers, a liquid crystal-based material and a coloring agent that is diffused in the liquid crystal-based material, so that the colouring agent can conceal the underlying instruments when inactive and show them during excitation.

## Description

The present invention relates to an instrument panel of a vehicle provided with a rigid front cover panel for protecting the underlying instruments and to the method for preparing it. The front cover panel is transparent and allows to view the underlying instruments. At the same time, the front cover panel prevents dust or objects from making contact with the delicate instruments and damaging them.

Devices of this kind are well-known. However, it has been found that this type of known instrument panel has the problem that it allows other people to view the instruments when the vehicle is not moving. In this manner, confidential information, such as for example the mileage, becomes immediately accessible to any ill-intentioned individuals.

The aim of the present invention is therefore to prevent third-party access to confidential information on the vehicle.

An object is to improve the safety and privacy of the vehicle with a means that is simple, low in cost, reliable, does not require the intervention of the driver, and also improves the overall aesthetic appearance of the vehicle.

This aim and this object are achieved by the instrument panel of a vehicle, according to the invention, provided with a rigid front cover panel for protecting the underlying instruments, characterized in that the cover panel is electrooptical and includes: two transparent conducting layers, a separate electrical contact for each one of the two conducting layers, and, interposed between the two conducting layers, a material chosen between:
i. a liquid crystal-based material and a coloring agent diffused in the liquid crystal-based material, and
ii. a liquid crystal-based coloring material;
so that the coloring agent can conceal the underlying instruments when inactive and can show them during excitation.

Preferably, the instrument panel includes a rigid transparent layer, the two conducting layers being flexible.

Preferably, a coupling between the rigid layer and a flexible layer is provided by virtue of an adhesive.

Preferably, the rigid layer is made of polyacrylate.

Preferably, the flexible layers are made of ITO or are based on polythiophene, polyanion, or an organic hydroxy or polyhydroxy compound.

Preferably, the coloring agent has an organic base, preferably an organometallic base.

Preferably, the coloring agent is liquid crystal-based so that the coloring agent also can undergo orientation during the excitation step.

Preferably, the coloring agent includes a multiaromatic unit bonded to a metal. Preferably, the coloring agent has the formula:

R¹―R²―R³ (1)

where R¹ and R³ are identical or different fractions, each of which provides at least one covalently bonded aromatic group (aromatic groups include unsaturated heterocyclic structures), and R² contains a polyvalent metal bonded to R¹ and R³ by means of covalent, ionic or weaker bonding forces.

Preferably, the liquid crystal-based material includes a polymeric material and a liquid crystal chosen among PDLC, LCDP, PSLC.

Preferably, the liquid crystal-based material has a microdroplet, microsphere or network morphology.

Preferably, the liquid crystal is organic or metalorganic with a mesogenic property of the nematic, cholesteric or smectic type.

The invention also relates to a method for manufacturing an instrument panel that has an electrooptical liquid-crystal and polymer front cover panel that includes:
(a) providing a material chosen between:
   i. a liquid crystal-based material and a coloring agent diffused in the liquid crystal-based material, a prepolymeric material and
   ii. a coloring material based on liquid crystal and a prepolymeric material;
(b) making the mixture cure;
(c) forming an electrooptical film;
(d) bonding the electrooptical film onto a rigid layer of the cover panel by means of an adhesive.

Preferably, the curing is performed by virtue of a method chosen among: ultraviolet radiation, solvent evaporation, cooling, heat and IR radiation.

Preferably, the electrooptical film has a normal, inverse or network morphology.

Preferably, the adhesive is a double adhesive.

The method includes the electrical activation of the cover panel.

The present invention will become better apparent with reference to the description that follows of an embodiment of the invention, which is given by way of non-limitative example and wherein:
Figure 1 is a schematic view of an instrument panel according to the invention, in which the instrument panel is not transparent;
Figure 2 is a schematic view of an instrument panel according to the invention, in which the instrument panel is transparent;
Figure 3 is a schematic view of the cross-section of the cover panel of the instrument panel according to the invention;
Figure 4 is a comparison of transmittance between the black instrument panel according to the invention and the milky-white instrument panel according to the invention;
Figure 5 is a comparison of density between the black instrument panel according to the invention and the milky-white instrument panel according to the invention;
Figure 6 is a comparison of transmittance between the black instrument panel according to the invention and the milky-white instrument panel according to the invention, at different viewing angles and at different voltages; and
Figure 7 is a view of the different appearance of the instrument panel between the activated step and the deactivated step.

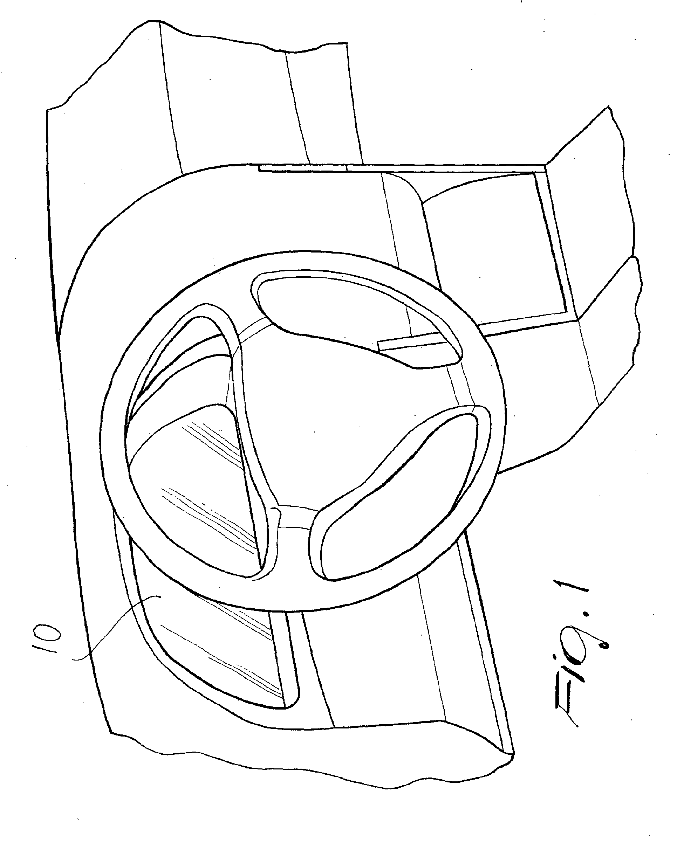

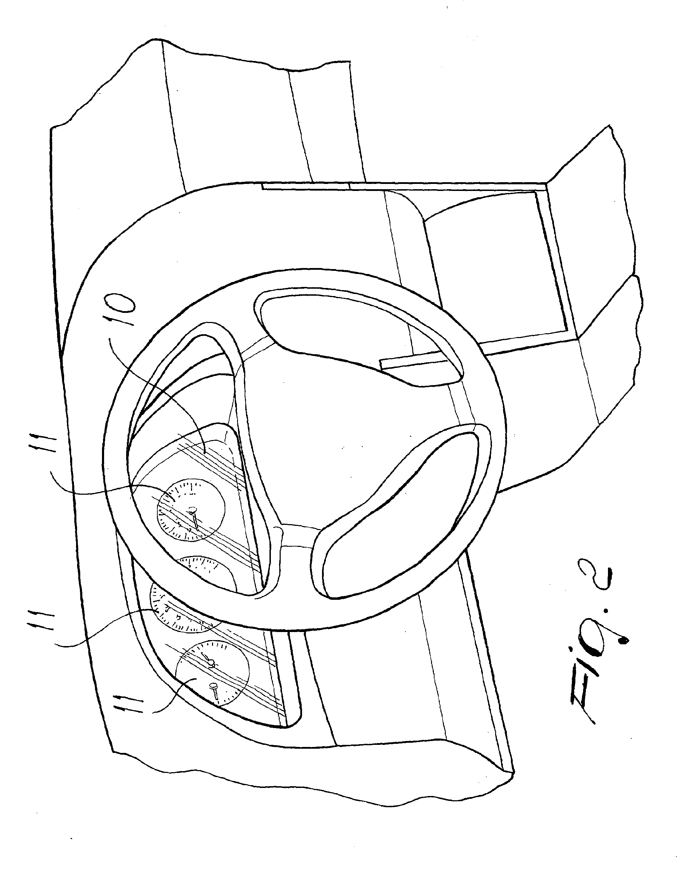

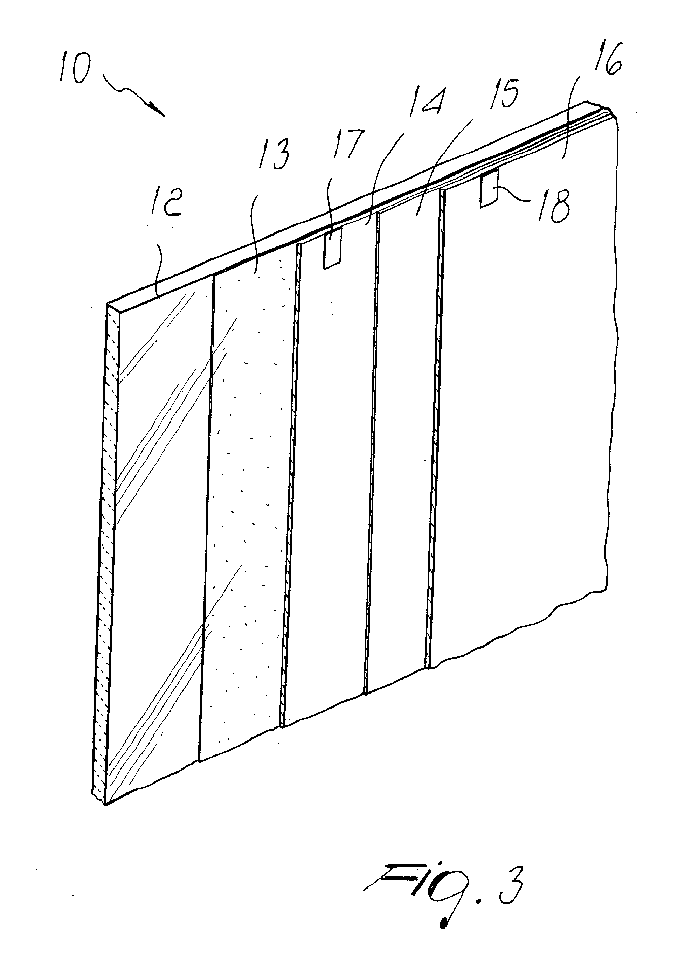

With reference to Figures 1 to 3, the cover panel 10 of the instrument panel can be transparent, with particular reference to Figure 2, or not transparent, with particular reference to Figure 1, thus preventing viewing of the underlying instruments 11.

The panel 10 is electrooptical and includes two transparent conducting layers 14 and 16. A separate electrical contact, designated by the reference numerals 17 and 18 respectively, is provided for each of the two conducting layers 14 and 16. The electrical contacts 17 and 18 are arranged so as to engage complementary electrical contacts arranged on the frame of the instrument panel and connected to the electrical system of the vehicle. In this manner it is possible to control at will the energizing of the contacts 17 and 18 in order to control the transparency or non-transparency of the cover panel 10.

A material 15 is interposed between the two conducting layers 14 and 17 and is chosen between:
i. a liquid crystal-based material and a coloring agent diffused in the liquid crystal-based material, and
ii. a liquid crystal-based coloring material;
so that the coloring material can conceal the underlying instruments when inactive and can show it when excited.

A rigid transparent layer 12 supports the other layers 14, 15 and 16 and protects the inside of the instrument panel. The coupling between the rigid layer 12 and a conducting layer 14 is provided by virtue of an adhesive layer 13.

Various phase separation methods can be used to prepare a colored electrooptical panel. These phase separation methods include the following:

### 1. Polymerization-induced phase separation (PIPS)

In polymerization-induced phase separation, polymeric aggregates form spontaneously in a continuous liquid-crystal phase as a consequence of the separation of the liquid-crystal and polymeric phases. Phase separation is induced by causing the polymerization of the uncured polymeric material. Phase separation by polymerization is particularly useful when prepolymeric materials can be mixed with liquid-crystal compounds having a low relative molecular mass. A uniform solution is prepared by mixing the prepolymer with the liquid crystal. Polymerization is obtained by means of a condensation reaction, like with epoxy resins, by free-radical polymerization, like with a vinyl monomer catalyzed with a free-radical initiator such as benzoyl peroxide, or by virtue of a photoinitiated polymerization. As polymerization progresses, polymeric aggregates form a discontinuous phase within the continuous liquid crystal phase. The polymerization rate is controlled by virtue of the curing temperature for heat-cured polymers or by means of the intensity of the light for photochemical polymerization.

### 2. Thermally-induced phase separation (TIPS)

In thermally-induced phase separation, a binary mixture of polymer and liquid crystal forms a solution at high temperature. The cooling of the solution causes separation of the phases. As with the preceding method, the liquid-crystal material forms a continuous phase that contains discontinuous polymeric aggregates.

### 3. Solvent-induced phase separation (SIPS)

In solvent-induced phase separation, a polymer, a liquid crystal and an organic solvent are mixed together and the solvent is evaporated. Solvent evaporation produces phase separation. It is also possible to use combinations of these phase separation methods.

Electrooptical components based on liquid crystal stabilized in polymer suitable for use in the instrument panel according to the invention are known.

Reference should be made, for example, to US patent no. 4,435,047 in the name of Fergason., In a PDLC electrooptical film, a discontinuous liquid-crystal phase is dispersed in a continuous polymeric phase.

Composite materials formed by liquid crystals dispersed in a polymeric matrix, such as for example polymer dispersed liquid-crystal (PDLC) devices, or devices made of polymer dispersed in a liquid-crystal matrix (LCDP), and nematic curvilinear aligned phase (NCAP) devices, generally include a liquid-crystal material (nematic, cholesteric or smectic) that is biaxially birefringent and is stabilized in a transparent polymeric matrix.

PDLC devices are interesting because they can be controlled electrically or switched electrically between relatively translucent states (i.e., states that diffuse light or are almost opaque) and relatively transparent states (i.e., states that transmit light). This switching is possible because the microdroplets of the liquid crystals have birefringence, i.e., optical anisotropy. All liquid crystals have two refractive indexes: an extraordinary refractive index, measured along the major axis of the rigid bar-shaped liquid crystals, and a smaller ordinary refractive index, which is measured on a plane that is perpendicular to the longitudinal axis. Accordingly, the droplets diffuse light greatly when they are orientated randomly in the matrix, and the devices appear to be translucent (or almost opaque). However, as a consequence of the application of an electrical field or of a magnetic field, the longer axes of the liquid crystal molecules inside microdroplets align along the direction of the vector of the electric/magnetic field and transmit light more directly.

If the refractive indexes of the liquid-crystal material and of the polymeric matrix are very similar while they are in the aligned state induced by the field, the devices appear transparent. Accordingly, upon application of an electric or magnetic field, for example, the device switches from a state in which it appears translucent (almost opaque) to a state in which it appears transparent. Upon removal of the electric or magnetic field, the device returns to a translucent (opaque) state.

Devices that contain composite liquid-crystal materials dispersed in a polymeric matrix have been used as light valves, filters, shutters, information displays and in glass panes and windows for architectural applications.

In scientific research on the PDLC technology, a phenomenon known as reverse morphology or microsphere morphology has been mentioned infrequently. In a reverse morphology system, the polymeric phase is dispersed in a continuous liquid-crystal phase.

Reverse morphology systems have already been described. Yamagishi et al., Proc. SPIE, 1080: 24-31 (1989) describes a reverse morphology system with a nematic liquid crystal and a memory effect. Nomura et al., J. Appl. Phys., 68(6): 2922-2926 (1990) describes an electrooptical film with a nematic liquid crystal component, connected polymeric microspheres and a memory effect.

Hakemi et al., EP 98124536.8 (Liquid crystal dispersed polymer electrooptical films having reverse morphology) describes an invention that relates to liquid crystal dispersed polymer (LCDP) electrooptical films. These LCDP electrooptical films include a discontinuous polymeric phase dispersed in a continuous liquid crystal phase.

The invention provides an electrooptical panel with liquid crystal stabilized in the polymeric matrix that includes a liquid crystal material, a coloring agent and a polymeric material in which the electrooptical component is a PDLC or LCDP film, which has a morphology of microdroplets or microspheres of the liquid crystal material of the nematic, cholesteric or smectic type; the coloring agent is an organic coloring agent (liquid crystal or not) or organometallic coloring agent (liquid crystal or not); the polymer is a thermoplastic, thermosetting (epoxy) or UV-curable polymer.

### POLYMERS

The polymers used in preparing electrooptical panels and films are derived from three categories, i.e., thermoplastic polymers (SIPS, TIPS), polymers cross-linked with UV radiation (PIPS) and thermosetting polymers (PIPS). The thermoplastic resin can be constituted by any known resin.

Thermoplastic polymers that are useful in the present invention include polyethylene, polypropylene; poly(1-butene); poly(4-methyl-1-pentene); polyisobutylene; polystyrene; polybutadiene; polychloroprene; poly(methyl methacrylate); poly(ethyl methacrylate); poly(n-butyl methacrylate); poly(vinyl acetate); poly(vinyl alcohol); poly(vinyl chloride); poly(vinylidene chloride); poly(vinyl fluoride); poly(vinylidene fluoride); poly(caprolactam); poly(hexamethylene adipamide); poly(ethylene terephthalate); polyoxymethylene; poly(ethylene oxide); poly(propylene oxide); poly(phenylene oxide); polycarbonate from bisphenol A; dimethyl polysiloxane; poly(N-vinyl pyrrolidinone); poly(ethylene imine); ethyl cellulose; methyl cellulose; hydroxyethyl cellulose; hydroxypropyl cellulose; sodium carboxymethyl cellulose; cellulose nitrate; cellulose acetate; poly(acrylic acid) and salts thereof; poly(methacrylic acid) and salts thereof; polyacrylamide; polyacrylonitrile; poly(methacrylonitrile); poly(caprolactone); phenoxide resins; polymers of 2-hydroxyethyl methacrylate; polymers of 2-hydroxypropyl methacrylate; polymers of acrylonitrile 2-hydroxyethyl acrylate; polymers of acrylonitrile 2-hydroxypropyl methacrylate; ethylene-ethylacrylate copolymers; ethylene-propylene copolymers; ethylene-vinyl acetate copolymers; vinyl chloride-vinyl acetate copolymers; styrene-butadiene copolymers; styrene-isoprene copolymers; styrene-acrylonitrile copolymers; styrene-methyl methacrylate copolymers; polyvinyl butyral; poly(methyl acrylate); poly(ethyl acrylate); poly(vinyl propionate); copolymers of ethylene-acrylic acid and salts thereof; cellulose acetate; cellulose propionate; cellulose acetate butyrate; poly(diallyl phthalate); poly(decamethylene adipamide); poly(11-aminoundecanoic acid); poly(12-aminododecanoic acid); poly(methyl vinyl ether); poly(isobutyl vinyl ether); poly(isobutyl methacrylate); and poly(isocyanate).

As noted earlier, thermosetting resins can be used in the present invention. Thermosetting polymers cure when they are transformed from a composition having a lower relative molecular mass, with heat, with or without a catalyst, curing agents, modifying agents and the like, into a polymerized thermoset resin having a higher relative molecular mass. Thermosetting is the act of using heat to convert the precursor having a lower relative molecular mass into the cured product. The temperature required to achieve this depends on the time allowed to the reaction, on the catalysts used, and on the relative reactivities of the complementary functional groups in the precursor. The thermosetting resin can be constituted by any known resin.

Thermosetting resins having an epoxy matrix, which cure at temperatures between approximately 120 and approximately 170 °C or higher, are suitable for use in composite materials, but bismaleimide (BMI) resins, phenolic resins, polyesters, PMR-15 polyimide resins and resins with terminal acetylene, typical high-performance thermosetting resins, also can be used in electrooptical devices. To prepare composite materials, it is possible to use other thermosetting resins, such as thermosetting resins from acrylic resins, polyurethane resins, resins with thermosetting induced by free radicals, and the like. The typical thermosetting resin is an A-stage resin, but in some cases it may be desirable to use a B-stage resin. A B-stage resin will influence the viscosity of the formulation of the resin.

There are various epoxy resins suitable for use in preparing electrooptical composite materials. All epoxy resins start with an epoxy precursor that is capable of giving a homopolymerization reaction that is initiated catalytically or made to co-react with complementary functional compositions, such as for example compounds with active hydrogen groups or other reactive groups capable of reacting with an epoxy resin so as to increase the relative molecular mass of the epoxy resin. The performance of the cured epoxy resin depends on the degree of functionality of the resin and of the co-reagent, on the degree of aromaticity of the resin, on the relative molecular mass of the epoxy resin, and on any co-reagent before reaction, and on the level of curing of the resin. The co-reagent can be an agent for the curing treatment and/or a curing agent.

### LIQUID CRYSTALS

The liquid-crystal materials that are useful in providing the present invention include smectic, nematic, cholesteric, ferroelectric materials and mesogenic and organometallic materials. Reference should be made to PCT patent publication no. WO 95/01410 (Hakemi).

Typical organic classes of materials that form liquid crystals being considered include aromatic and aliphatic organic compounds, such as benzylidene anilines, generally prepared from the reaction of para-substituted benzaldehyde and para-substituted aniline; N-(p-alkoxybenzylidene)-p-aminostyrenes prepared from the reaction of the appropriate aldehyde with p-aminostyrene; beta-sitosterol derivatives; active amyl ester of cyano benzylidene aminocinnamate; compounds that contain p-phenylene, such as p-phenylene p-alkoxybenzoates; aminoacetophenones; aminopropiophenones; phenylene diamines; chlorophenylene diamines; terephthals; p,p'-disubstituted dibenzyls; p, p'-disubstituted stilbenes; p,p'-disubstituted diphenylacetylenes; p,p'-disubstituted 1,4-diphenylbutadiene; p,p'-disubstituted phenyl benzoate; substituted phenyl alkyl carbonates and diphenyl carbonates; p-n-alkyl benzoic acids; p-n-alkoxybenzoic acids and Schiff bases prepared from p-substituted benzaldehydes and compounds of the following types: p-phenylene diamines, 4,4'-diamino diphenyl, 4-phenylazoanilines, naphthylamines and naphthylene diamines.

Specific liquid-crystal compounds include ethyl p-4-ethoxy benzylidene aminocinnamate; diethyl ester of p,p'-azoxybenzoic acid; N-(p-methoxybenzylidene)-p-aminostyrene; N-(p-butoxybenzylidene)-p-aminostyrene; p-azoxyanisol; p-hexyloxy benzalazine; p-azoxy phenetol; p-anisylidene-p-diphenylamine; p-ethoxybenzylidene-p-diphenylamine; p-anisylidene-p-aminophenyl acetate; p-ethoxybenzylidene-p-aminophenyl acetate; p-n-hexyloxybenzylidene-p-aminophenyl acetate; deca-2,4-dienoic acid; 4,4'-di-n-heptoxy azoxybenzene; 4,4'-di-n-hexoxy azoxybenzene; 4,4'-di-n-pentoxy azoxybenzene; 4,4'-di-n-butoxy azoxybenzene; 4,4'-diethoxy azoxybenzene; undeca-2,4-dienoic acid; nona-2,4-dienoic acid; 4,4'-dimethoxystilbene; 2,5-di(p-ethoxybenzylidene)cyclopentanone; 2,7-di-(benzylidene amino)fluorine; 2-p-methoxybenzylidene aminophenanthrene; 4-methoxy-4"-nitro-p-terphenyl; 4-p-methoxybenzylidene aminodiphenyl; 4,4'-di(benzylidene amino)diphenyl; p-n-hexylbenzoic acid; p-n-propoxybenzoic acid; trans-p-methoxy cinnamic acid; 6-methoxy-2-naphtholic acid; p-phenylene di-p-anisate; p-phenylene di-p-ethoxy benzoate; p-phenylene di-p-n-hexyloxy benzoate; p-phenylene di-p-n-heptyloxybenzoate; p-phenylene di-p-n-octyloxybenzoate; 1,4-dicyclo[2.2.2]octylene di-p-anisate; 1,4-dicyclo[2.2.2]octylene di-p-n-octyloxybenzoate; trans-1,4-cyclohexylene di-p-n-butoxybenzoate; 4,4'-di(p-methoxybenzylidene amino)benzyl; p,p'-diacetoxystilbene; 1,2-di(p-methoxyphenyl)-acetylene; p-(p-acetoxyazo)benzoic acid; 1,4-di-(p-methoxyphenyl)-butadiene; p-anisal-p-anisidine; p,p'-dimethoxybenzal-1,4-naphthalene diamine; p-n-butylbenzoic acid; p,p'-di-n-butyldiphenyl pyridazine; p-(p-cyanobenzal)anisidine; p-(p-methoxy benzoxy)benzoic acid; anisal-p-aminoazobenzene; 1-(4'-anisal amino)-4-phenylazonaphthalene; N-(p-methoxybenzylidene)-p-n-butylaniline; N-(p-n-octyloxybenzylidene)-p-n-butylaniline; p-anisylidene-p-phenylazoaniline; N,N'-dibenzylidenebenzidine; N,N'-di(p-n-hexyloxybenzylidene)benzidine; p-bis(heptyloxy benzoyloxy)benzene; p-n-propoxybenzoic acid; p-n-butoxybenzoic; p-n-amyloxybenzoic acid; p-n-heptyloxybenzoic acid; p-n-octyloxybenzoic acid; butyl-p-(p-ethoxyphenoxycarbonyl)phenylcarbonate; p-(p-ethoxy-phenylazo)phenylheptanoate; 4-[(p-hexyloxycarbonyl oxybenzylidene)amino]-1-pentyloxybenzene; N-p-(pentyloxycarbonyloxy)benzylidene]-p-anisidine; p-[(p-butoxyphenyl)-azo]phenyl butyl carbonate; p-(pentoxyphenylazo)phenyl hexanoate; p-(p-ethoxyphenylazo)phenyl valerate; p-[(p-ethoxylbenzylidene)amino]benzonitrile; p-[(p-methoxybenzylidene)amino]benzonitrile; ethyl p-[(p-methoxybenzylidene)amino]cinnamate; p-(p-ethoxyphenylazo)phenyl crotonate; p-[(p-methoxybenzylidene)amino]-phenyl p-toluate; p-[(p-methoxybenzylidene)amino]-phenyl benzoate; p-[(p-ethoxybenzylidene)amino]phenyl benzoate; N,N'-di(p-methoxybenzylidene)-α,α'-bi-p-toluidine; p-anisalazine; 4-acetoxy-3-methoxycinnamic acid; p-acetoxycinnamic acid; 4'-[(p-pentyl oxycarbonyl oxybenzylidene)aminovalerophenone; diethyl p,p'-azoxy dicinnamate; 4-butoxybenzylidene-4'-aminoacetophenone; 4-decyloxybenzylidene-4'-aminoacetophenone; 4-dodecyloxybenzylidene-4'-aminoacetophenone; 4-heptyloxybenzylidene-4'-aminoacetophenone; 4-hexyloxybenzylidene-4'-aminoacetophenone; 4-methoxybenzylidene-4'-aminoacetophenone; 4-nonyloxybenzylidene-4'-aminoacetophenone; 4-octyloxybenzylidene-4'-aminoacetophenone; 4-pentyloxybenzylidene-4'-aminoacetophenone; 4-propoxybenzylidene-4'-aminoacetophenone; 4-butoxybenzylidene-4'-aminopropiophenone; 4'-aminopropiophenone; 4-ethyloxybenzylidene-4'-aminopropiophenone; 4-hexyloxybenzylidene-4'-aminopropiophenone; 4-methoxybenzylidene-4'-aminopropiophenone; 4-nonyloxybenzylidene-4'-aminopropiophenone; 4'-octyloxybenzylidene-4'-aminopropiophenone; 4-pentyloxybenzylidene-4'-aminopropiophenone; 4-propoxybenzylidene-4'-aminopropiophenone; bis-(4-bromobenzylidene)-2-chloro-1,4-phenylenediamine; bis-(4-chlorobenzylidene)-2-chloro-1,4-phenylenediamine; bis-(4-n-decyloxybenzylidene)-2-chloro-1,4-phenylenediamine; bis-(4-dodecyloxybenzylidene)-2-chloro-1,4-phenylenediamine; bis-(4-n-hexyloxybenzylidene)-2-chloro-1,4-phenylenediamine; bis-(4-methoxybenzylidene)-2-chloro-1,4-phenylenediamine; bis-(4-nonyloxybenzylidene)-2-chloro-1,4-phenylenediamine; bis-(4-n-octyloxybenzylidene)-2-chloro-1,4-phenylenediamine; bis-(4-n-pentyloxybenzylidene)-2-chloro-1,4-phenylenediamine; bis-(4-bromobenzylidene)-1,4-phenylenediamine; bis-(4-chlorobenzylidene)-1,4-phenylenediamine; bis-(4-n-decyloxybenzylidene)-1,4-phenylenediamine; bis-(4-n-dodecyloxybenzylidene)-1,4-phenylenediamine; bis-(4-fluorobenzylidene)-1,4-phenylenediamine; bis-(4-n-heptyloxybenzylidene)-1,4-phenylenediamine; bis-(4-n-hexyloxybenzylidene)-1,4-phenylenediamine; bis-(4-n-nonyloxybenzylidene)-1,4-phenylenediamine; bis-(4-n-hexyloxybenzylidene)-1,4-phenylenediamine; bis-(4-n-nonyloxybenzylidene)-1,4-phenylenediamine; bis-(4-n-octyloxybenzylidene)-1,4-phenylenediamine; bis-(4-n-pentyloxybenzylidene)-1,4-phenylenediamine; terephthal-bis-(p-bromoaniline); terephthal-bis-(p-chloroaniline); terephthal-bis-(p-fluoroaniline); terephthal-bis-(p-iodoaniline) and the like.

Nematic liquid crystal materials suitable for use with organometallic liquid crystals include: p-azoxyanisol, p-azoxyphenetol, p-butoxybenzoic acid, p-methoxycinnamic acid, butyi-p-anisylidene-p-aminocinnamate, anisylidene p-amino-phenylacetate, p-ethoxybenzalamino-α-methyl-cinnamic acid, 1,4-bis(p-ethoxybenzylidene)cyclohexanone, 4,4'-dihexyloxybenzane, 4-4'diheptyloxybenzene, anisal-p-amino-azo-benzene, anisaldazine, α-benzene-azo-(anisal-α'-naphthylamine), n,n'-nonoxybenzetoluidine, anilines of the generic group (p-n-alkoxybenzylidene-p-n-alkylanilines), such as p-methoxybenzylidene p'-n-butylaniline, p-n-butoxybenzylidene-p'-aminophenylacetate, p-n-octoxybenzylidene-p'-aminophenylacetate, p-n-benzylidene propionate-p'-aminophenylmethoxide, p-n-anisylidene-p'-aminophenylbutyrate, p-n-butoxybenzylidene-p'-aminophenylpeatoate and mixtures thereof. Useful conjugate cyano organic compounds are 7,7',8,8'-tetracyanokinodimethane (TCNQ), (2,4,7-trinitro-9-fluoroenylidene)-malono-nitrile (TFM), p-[N-(p'-methoxybenzylidene)amino]-n-butylbenzene (MBBA), p-[N-(p'-ethoxybenzylidene)amino]butylbenzene (EBBA), p-[N-(p'-methoxybenzylidene)amino]phenyl butyrate, n-butyl-p-(p'-ethoxyphenoxycarbonyl)phenylcarbonate, p-methoxy-p'-n-butylazoxybenzene, p-ethoxy-p'-n-butylazobenzene, p-[N-(p'-methoxybenzylidene)amino]benzonitrile (BBCA), p-[N-(p'-hexylbenzylidene)amino]benzonitrile (HBCA), pentylphenylmethoxy benzoate, pentylphenylpentyloxy benzoate, cyanophenylpentyl benzoate, cyanophenylpentyloxy benzoate, cyanophenylheptyloxy benzoate, cyanophenyloctyloxy benzoate, cyanophenylmethoxy benzoate, and the like.

Desirable nematic liquid crystals often include cyanobiphenyls and can be mixed with cyanoterphenyls and with various esters. There are commercially available mixtures of liquid crystals of the nematic type, such as the "E7" liquid crystal mixture (Licrilite^{R} BL001 by E. Merck, Darmstadt, Germany, or its partners such as EM Industries, Hawthorne, NY, and Merck Industrial Chemical, Poole, United Kingdom), which is a mixture (by weight) of 51% 4-n-pentyl-n-cyanobiphenyl (5CB), 32% 4'-n-heptyl-n-cyanobiphenyl (7CB), 16% 4'-n-octoxy-4-cyanobiphenyl, 12% 4'-n-pentyl-4-cyanoterphenyl which has a temperature of transition from the crystalline phase to the nematic liquid crystal phase of -10 °C and a temperature of transition from liquid crystals to isotropic phase of 60.5 °C. Examples of other such commercial mixtures of liquid crystals are as follows:
E-31 is a patented mixture of cyanobiphenyls and of a non-cyano biphenyl ester of E. Merck, cited above, which has a temperature of transition from the crystalline phase to the nematic crystalline phase of -9 °C and a temperature of transition from the liquid-crystal phase to the isotropic phase of 61.5 °C.
E-44 is a patented mixture of cyanobiphenyls, a cyanoterphenyl and a non-cyano biphenyl ester available from E. Merck, cited above, which has a temperature of transition from the crystalline phase to the nematic liquid-crystal phase of -60 °C and a temperature of transition from the liquid-crystal phase to the isotropic phase of 100 °C.
E63, by E. Merck, cited above, is a mixture of liquid crystals that is similar to E7 with the addition of cyclohexanes. It contains: significant amounts of the liquid-crystal component commonly known as 5CB, 7CB, smaller quantities of 5CT, smaller quantities of benzonitrile, 4-(4-propyl-1-cyclohexene-1-yl) commonly known as PCH3, smaller quantities of 4-carbonitryl, 4'-(4-pentyl-1-cyclohexene-1-yl)-1,1'-biphenyl, commonly known as BCH5, and even smaller quantities of [1,1'-biphenyl]-4-carboxylic acid, 4'-heptyl-4'-cyano[1,1-biphenyl]-4-yl ester, commonly known as DB71. K12 is 4-cyano-4'-butylbiphenyl and has a temperature of transition from the crystalline phase to the nematic liquid crystal phase of 48 °C. K-18 is 4-cyano-4'-hexylblphenyl and has a temperature of transition from the crystalline phase to the nematic liquid crystal phase of 14.5 °C and a temperature of transition from the liquid-crystal phase to the isotropic phase of 29 °C. K-21 is 4-cyano-4'-heptylbiphenyl and has a temperature of transition from the crystalline phase to the nematic liquid crystal phase of 30 °C. K-24 is 4-cyano-4'-octylbiphenyl and has a temperature of transition from the crystalline phase to the smectic liquid crystal phase A of 21.5 °C, a temperature of transition from smectic phase C to the nematic liquid crystal phase of 33.5 °C, and a temperature of transition from the nematic liquid crystal phase to the isotropic phase of 40.5 °C. M-15 is 4-cyano-4'-pentoxybiphenyl and has a temperature of transition from the crystalline phase to the nematic liquid crystal phase of 48 °C and a temperature of transition from the liquid-crystal phase to the isotropic phase of 68 °C. M-18 is 4-cyano-4'-hexoxybiphenyl and has a temperature of transition from the crystalline phase to the nematic liquid crystal phase of 57 °C and a temperature of transition from the liquid-crystal phase to the isotropic phase of 75.5 °C. M-24 is 4-cyano-4'-octoxybiphenyl and has a temperature of transition from the crystalline phase to the smectic liquid crystal phase A of 54.5 °C.

### COLORING AGENTS

When the organic or organometallic liquid-crystal pleochroic coloring agent is part of the discontinuous phase, it can be present in the discontinuous phase in an amount that varies from approximately 0.01 to approximately 99.99% by weight in the weight of the discontinuous phase, and the remaining liquid crystal can vary from approximately 99.99 to approximately 0.01% by weight in the weight of the discontinuous phase. Preferably, in the case of these mixtures, the organic or organometallic liquid-crystal pleochroic coloring agent constitutes approximately 0.05 to approximately 50% by weight in the weight of the discontinuous phase and the remaining liquid crystal (which does not contain metal) can vary from approximately 50 to approximately 99.95% by weight in the weight of the discontinuous phase. More preferably, the weight ratio between the two types of liquid crystal is from approximately 0.01 to approximately 30% by weight. The remaining liquid crystal can be any one of the liquid crystals known in the field other than organometallic liquid crystals, provided that it has the required compatibility with the organometallic liquid crystal and has the crystalline shape sought for the device. The MOM can contain nematic, smectic, cholesteric and discotic phases. The cholesteric forms (or chiral nematic forms) of the MOM can be combined with nematic MOM in order to combine the effects of the color of each one so as to obtain another form of color. The presence of the light absorbing qualities of the metal and the reflective attributes in the visibile range of cholesteric "inserts" allows to modify or vary the color of the polymer dispersed liquid crystal film.

Organometallic liquid crystal coloring agents, commonly termed organometallic liquid crystal compounds, include a metal fraction, such as the metals of groups 5-11 of the periodic table, new denomination, published by CRC Handbook of Chemistry and Physics, 67^{th} edition, CRC Press, Inc., 1986. The metals included are vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, lanthanides or uranium, and the like.

Organometallic compounds are liquid-crystal materials that represent at least one portion of the discontinuous liquid-crystal phase of the composite. To the extent to which the organometallic compound is part of a discontinuous liquid-crystal phase, it is at least compatible with the remaining portion of the liquid crystals in the discontinuous phase, to the extent to which its presence contributes to the properties of the entire discontinuous phase. The compatibility of the organometallic compound can vary from the forming of solutions to the forming of fine disperse systems with the remaining liquid-crystal components of the continuous phase.

It has been found that many of the organometallic liquid-crystal compositions give a color to the discontinuous liquid-crystal phase. This stable color acts as a replacement for existing unstable pleochroic coloring agents.

The compounds according to the present invention can be controlled thermally, electrically, magnetically and/or electromagnetically, so that in a device they can be made to pass from a light-scattering mode to a light-transmitting mode. All this is done with advantages in terms of response times and voltages, dielectric constants, resistivity and modifies indexes that satisfy both the continuous phase and the discontinuous phase. As with conventional PDLC and NCAP composites, the composite (i) according to the present invention responds optically to deformation, and therefore when a voltage is applied to it, it acts like a polarizer, which transmits a light component that is polarized on one plane and scatters the other component and (ii) when cured in the presence of an electric or magnetic field it acts as an electrically controllable polarizer.

The films prepared from the composites according to the present invention can be sandwiched between conducting plastic films, glass plates, as well as a layer of film and a layer of glass, in order to form continuous sheets. They are highly scattering in the OFF state and transparent like window panes in the ON state. They do not require surface alignment layers, polarizers or cell sealing. They are durable and have a pleasant aesthetic appearance.

The discontinuous phase of the composite includes micron-size droplets of the liquid crystal, which include the organometallic liquid crystal alone or in combination with at least another liquid crystal. The continuous phase is the polymer that can contain other formulated ingredients, such as plasticizers, coloring agents, curing agents, catalysts and the like. It can be a bonding agent for the discontinuous phase. The continuous phase can contain conventional liquid crystal and MOM dissolved therein, to the extent to which each one is extracted from the discontinuous phase in the continuous phase. The other liquid crystal can be any of the liquid crystals that are conventional in the field, so long as a compatible organometallic liquid crystal component is present. Above all, the other liquid crystals are monomeric, and for this reason have a relatively low relative molecular mass. The composite includes approximately 30 to approximately 70% by weight of the discontinuous phase, the rest being the continuous phase. The liquid crystal, can be nematogenic, smectogenic or cholesterogenic. Nematic liquid crystals are preferred.

The standard size of the droplets (as droplets of nematic liquid crystals) in the composite is usually on the order of the UV-visible-NIR/HIR range, with a diameter of approximately 200-1000 nanometers. In the preferred embodiment of the invention, the size of the nematic droplets is controlled to a preset value, from as small as 0.1 µm to as large as 10 µm. By virtue of the characteristics of the organometallic liquid crystal, the control of the size of the particles of the droplet allows to improve the refractive indexes (index coupling) of the liquid crystal in the droplets and of the polymeric matrix in order to reduce residual angular scattering (blur).

One advantage of the use of organometallic liquid crystals in the composite is the possibility to control the kinetics of the separation of the phases and of the curing of the resin in order to improve the contrast ratio (transparency/opacity) of polymer dispersed liquid crystal films. This is done by manipulating (i) the solubility of the liquid crystal in the resin, (ii) the rate of droplet formation, (iii) by controlling the solidification rate of the polymer and (iv) by controlling the morphology of the liquid crystal droplets.

Disk- and rod-type metallomesogens of many types are known. Most mononuclear systems have the metal at the center or close to the center of gravity of the molecule. This is true for disk-like mesogens (for example phthalocyanines, p-diketonates, and dinuclear carboxylates) as well as for nematic and smectic calamitic mesogens.

The basic requirements for a metallic complex to exhibit mesoformism are not dissimilar to those for many organic compounds. Thus, a calamitic mesogen typically has a long rigid group, which frequently but not essentially corresponds to the core of the molecule that contains the metallic atom and two trans-ligands that contain aromatic rings, which bear n-alkyl (or n-alkoxy) tails in the p positions. Shorter tails tend to produce nematic mesogens, longer tails produce smectic mesogens, and the stretched S-shape with "dipoles off the edge" that is typical of many organic compounds that form S_{c} phases is also present in many S_{c} metallomesogens with n-alkyloxyphenyl tails. In certain cases it is possible to produce calamitic mesogens with only a long organic ligand; these are often S_{A}- phases.

A disk-like molecule is usually shaped like a flat plate with the metal at the center and surrounded by a highly unsaturated organic ligand which bears at least four, preferably six or eight, n-alkyl (or n-alkoxy) substituents. Most currently known metallomesogens are of the column disc type, and include carboxylates, β-diketonates, and phthalocyanines. On the contrary, the complexes of salicylaldiminate ligands, particularly those with longer hydrocarbon tails, tend to produce smectic phases. Both for calamitic compounds and for disk-like compounds, usually it is necessary to wait for the tails to be at least 5 atoms long in order to exhibit mesomorphism, and the presence of an extra phenyl in the tail is often advantageous.

The structure of the organometallic liquid crystal compound includes a multiaromatic unit bonded to a metal of at least two aromatic groups bonded covalently, either directly or by means of other organic or inorganic bonding groups, which are polyvalent. In general there are at least two multiaromatic units bonded to the metal. The following is an example of such a structure:

R¹―R²―R³ (1)

where R¹ and R³ are identical or different fractions, each of which provides at least one covalently bonded aromatic group (the aromatic groups include the unsaturated heterocyclic structures) and R² contains a polyvalent metal, bonded to R¹ and R³ by means of covalent, ionic or weaker bonding forces. R² can contain an atom of the ring of an aromatic structure or of an unsaturated heterocyclic structure and thus constitutes part of the aromaticity of the composition. Suitable polyvalent metals are those of groups 5-11 of the periodic table, new denomination, published by CRC Handbook of Chemistry and Physics, 67^{th} edition, CRC Press, Inc., 1986. The metals included are vanadium, niobium, tantalum, chromium, molybdenum, tungsten, manganese, technetium, rhenium, iron, ruthenium, osmium, cobalt, rhodium, iridium, nickel, palladium, platinum, copper, silver, gold, rare-earth metals or uranium, and the like. The compound (1) can have an anionic or cationic component of a salt in which the counterion is a structure that does not affect negatively the properties of the liquid crystals of the compound (1) or combines it with the compound (1) in order to provide the properties of liquid crystals.

Particularly preferred compositions of organometallic liquid crystals that can be used in the embodiment of the present invention include the ones that have the formula: 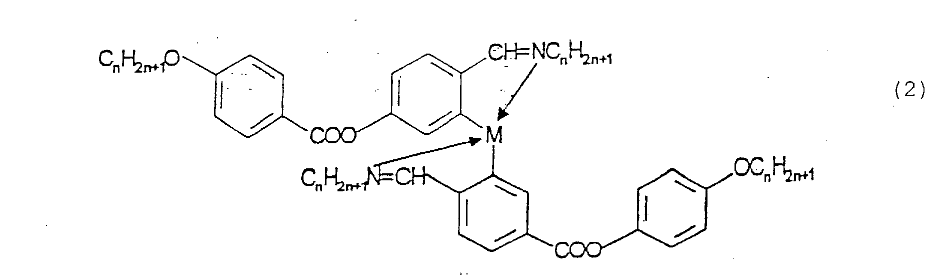 where M is copper, nickel, vanadium oxide and palladium and n and m are positive numbers, so that the compound 2 is a liquid crystal, preferably a nematogenic one. In general, n and m each have a value of 2 to approximately 15, sufficient for the compound to be mesogenic, preferably so that the compound has enantiotropic, monotropic, smectic, nematic and/or cholesteric phases. These compositions are described by Caruso et al., Liquid Crystals, 1990, Vol. 7, no. 3, pages 421-430, and Liquid Crystals, 1991, vol. 10, no. 1, pages 85-93.

Other preferred compositions of organometallic liquid crystals that can be used in the embodiment of the present invention relate to a class of liquid-crystal compounds formed by ion interaction of mesogenic cations with mesogenic anions. Both can contain a metal. One type can be represented by the general formula:

L₂MX₂ (3)

where L represents an organonitrogen mesogen, M is defined above, X represents a halide (see Maitliss et al., W087/02693, published on 7 May 1987). Preferred embodiments of the compounds (3) are obtained when the metal is palladium or platinum. Other organometallic mesogens that are suitable in the execution of the invention are the ones represented by the general formulas:

LRh (CO) ₂X (4)

LAuX (5)

where L and X are as defined above (see Bruce et al., J. Chem. Soc., Chem. Comm., 1985, 581; Adams et al., Liquid Crystal 1987, 2, 38). Other suitable ionic mesogens are represented by the formulas:

[L₂Ag]⁺BF₄⁻ (6)

[L₂Ag)⁺Y⁻ (7)

X⁺Y⁻ (8)

where L is as defined above, Y⁻ is a mesogenic anion and X⁺ is a mesogenic cation. Another class of mesomorphic organometallic compounds is represented by the formula:

[(R⁴COO)₄M₂] (9)

where R⁴ represents an alkyl or aryl group, for example C₁₁H₂₃, and M is as defined above. Methods for preparing these organometallic mesogens are described by Maitliss et al., WO87/02693, published on 7 May 1987.

The following are specific examples of the compounds (3)-(9):
1. bis (4-carbonitrile-4'-nonyloxybiphenyl)dichloropalladium
2. orange bis (4-carbonitrile-4'-octylbiphenyl)dichloroplatinum cis-dicarbonyl (4-carbonitrile-4'-nonyloxybiphenyl)chlororhodium
3. yellow silver bis(4-butoxy-4'-stilbazole) tetrafluoroborate
4. [MO₂(C₁₂H₂₁O₂)₄]
5. blue-green [Rh₂(C₁₂H₂₁O₂)]₄ complex
6. X⁺ = [Me₃NC₁₆H₃₃]⁺, Y⁻ = [SO₄C₁₂H₂₅]⁻
7. bis(4-carbonitrile-4'-pentylbiphenyl) dichloropalladium
8. bis(4-carbonitrile-4'-nonyloxybiphenyl)dichloropalladium (melts producing a mesophase at 119 °C which persists until an isotropic liquid is present at 147 °C. A nematic phase forms by cooling from the isotropic liquid, and the material is fully nematic at 130 °C)
9. bis(4-carbonitrile-4'-octylbiphenyl)dichloroplatinum (melts producing a nematic phase at 170 °C which becomes an isotropic fluid at 190 °C).
   Moreover, the following compounds are preferred:
10. The cis-dicarbonyl-(4-carbonitrile-4'-nonyloxybiphenyl)chlororhodium complex (melts producing a nematic phase at 52 °C which becomes an isotropic liquid at 80 °C).
11. The bis(4-butoxy-4'-stilbazole) tetrafluoroborate silver complex (melts at 180 °C in a smectic phase which by heating to 305 °C becomes an isotropic liquid)
12. Mixtures of (C₃H₇C₆H₁₀CN) chloropalladium and (C₅H₁₁C₆H₁₀C₆H₁₀CN) chloropalladium (which has enantiotropic nematic phases, while the second component has only a monotropic nematic phase).

As will be apparent to the person skilled in the art, the difference in the physical properties of MOM with respect to the liquid crystal that does not contain metal used traditionally in polymer dispersed liquid crystal composites produces a mechanism for controlling the kinetics of phase separation and curing of the resin in order to vary and in particular improve the contrast ratio (transparency/opacity) of polymer dispersed liquid crystal films by controlling (i) the solubility of the liquid crystal in the resin, (ii) the droplet formation rate, (iii) by controlling the polymer solidification rate and (iv) by controlling the morphology of the liquid crystal droplets (size, density). This is the case, in particular, when using MOM together with conventional nonmetallic liquid crystals in the polymer dispersed liquid crystal composite.

In the preferred embodiment of the invention, the organometallic liquid crystal is used in combination with another compatible liquid-crystal composition that is not metallic. Preferably, these other liquid crystals are in a nematic or functionally nematic form, which means that in the absence of external field the structural distortion of the liquid crystal is dominated by the orientation of the liquid crystal at its borders rather than by mass effects, with very strong torsions (like in a cholesteric material) or stratification (like in smectic materials). Thus, for example, a liquid-crystal material that includes chiral ingredients that induce a tendency to torsion but cannot overcome the effects of the alignment at the borders of the liquid-crystal material is considered functionally nematic. More preferably, they also have a positive dielectric anisotropy.

When organometallic liquid crystals are used in combination with non-organometallic liquid crystals, the organometallic liquid crystals must be compatible with the non-organometallic liquid crystals. Preferably, the organometallic liquid crystals must be soluble in the non-organometallic liquid crystals. The combination of organometallic mesogens and of conventional liquid crystals generally forms a eutectic melting mixture.

This can be noticed from the increase of the mixture of liquid crystals in Tₙₑ.Nematic liquid crystals suitable in composition typically contain a linear chain of at least one, preferably two, aromatic groups, preferably phenylene or aromatic heterocyclic groups, linked to a bonding group as a covalent bond, a carbonyloxy group, a vinylene group (-CH=CH-), a carbonylimino group, an ethylene group (-C=C-), an azomethinic group (-CH=N-), an azoic group (-N=N-), an azoxy group, and the like. Preferred nonmetallic liquid crystals include cyanobiphenyls and can be mixed with cyanoterphenyls and with various esters.

The coloring materials that are useful in providing the present invention include: organic pleochroic liquid crystal coloring materials, such as smectic, nematic, cholesteric, ferroelectric materials; non-liquid-crystal organic materials; mesogenic organometallic materials as well as organometallic mesogens. Reference should be made to the publication of PCT patents no. WO 95/01410, EP0656927B1, US5,843,333 (Hakemi).

### Transparent conductive layers

The conductive transparent layer to be used in the present invention can be constituted by a variety of substrates, such as the ones known in the art, i.e., flexible substrates that have been provided with an electrodic layer on one of their surfaces. The flexible substrate is typically a transparent substrate that bears a transparent electrodic layer on its surface. The other flexible substrate is also transparent and likewise bears a transparent electrodic layer.

Some examples of the resins for the flexible substrates to be used in the present invention include polyesters such as such as polyethylene terephthalate (PET) and polybutylene terephthalate, and polycarbonates, polypropylene, polyethersulfones (PES) and polyamides. Among these, preference is given to polyethylene terephthalate and to polyethersulfones.

The electrodic layer to be used can be a conventional layer, and some examples of the electrodic layer include a film of tin oxide known as NESA film, a layer of indium-tin oxide in which the tin oxide is mixed, the layer being known as ITO film, and thin films of metals such as gold, silver, nickel, bronze and titanium, which are thin films that have conductivity. Among these, particular preference is given for the transparent electrodic layer to ITO films, et cetera. The two flexible substrates preferably have a form that is suitable to perform the continuous production process, such as for example a film or sheet form, and it is desirable to use these substrates in a rolled-up condition.

The transparent conducting film is typically formed by virtue of conventional methods of the known art, such as for example sputtering, or by vacuum deposition with electron beams. Other methods, such as ion plating, cladding and deposition of chemical vapors are advantageously suitable.

There is no particular limitation in favor of substrates usable in the present invention, and the forms of the substrate to be used can vary according to the purpose of use, et cetera. Generally, flat sheet-like or film-like substrates are preferably used in the present invention, and it is particularly preferable to use film-like substrates to take advantage of their adaptability to continuous production systems.

The premise of this invention is the application and development of a black PDLC film the can be used as an electrooptical fascia with excellent performance due to contrast. In other words, an attempt has been made to improve the ratio between the amount of light transmitted by the specimen in the ON state and the amount transmitted in the OFF state. The success of this attempt is in proportion to the extent to which the molecules of coloring agent form bonds with the liquid crystal molecules alone and do not form bonds with those present in the polymeric matrix. The chosen coloring agents have the same properties that allow the liquid crystals to reorientate in the presence of the applied voltage; accordingly, they follow, during the operating process, the liquid crystal molecules, affecting the incoming light by virtue of the intense absorption that characterizes them.

In the described device, the nematic liquid crystal is encapsulated in a mesh that is formed by a suitably cured polymer. A small quantity of coloring agent is dissolved in solution in the liquid crystal. Encapsulation consists in confining the liquid crystal in clearly determined regions of the medium, whose dimensions depend on the manner in which the polymer is cross-linked. One way to obtain these regions is to produce a uniform mixture of polymer and liquid crystal, which is then initiated by a chemical or optical process, forming the polymeric mesh. The result is a surface that is cured by the polymer and has the electrooptical properties of the liquid crystal. This screen is specifically a device that modulates the incoming light according to the electrical voltage applied externally.

One method for applying uniformly the electrical voltage applied in order to modulate the electrical properties of the device is to spread the compound onto a conductive substrate that is chosen appropriately so as to not alter the structural characteristics of the compound.

The regions in which the liquid crystal remains confined are spherical. This geometry, in the absence of an applied external voltage, gives the molecules that are present internally a clearly determined elastic distortion. The configuration of the molecules distorted in this manner causes the coloring agent to absorb the light in all the directions that are present on the surface of the layer, which are also the polarization directions of the incident light. When the external voltage assumes the ON state, the liquid crystal molecules with positive dielectric anisotropy tend to assume, inside the individual spheres, a collective alignment that is parallel to the direction of the applied field, which is perpendicular to the surface of the layer. Accordingly, the absorption of the light on the part of the coloring agent, aligned like the liquid crystal, is reduced drastically because the polarization of the light is on the average perpendicular to the average dipole moment of the molecules of coloring agent.

Optimization of the contrast of the device can be improved if the encapsulated liquid crystal has a normal refractive index that is close to the refractive index of the polymer that is used (matching condition) to form the supporting mesh.

The effect of the polymer is not only to form a solid supporting mesh and to encapsulate the liquid crystal molecules, but also helps to produce a strong adhesion of the layer to the conducting material on which the mixture is spread.

The characteristics of the device are greatly changed in relation to the diameter of the spherical regions in which the liquid crystal is confined. This diameter can be controlled by acting on the parameters of the phase separation process that is induced during the generation of the polymeric mesh.

One advantage of the invention is that it allows to overcome the problems encountered in the past in the manufacture of large-size liquid crystal screens by introducing the molecules in regions having a controlled diameter that maintain all the liquid-crystal properties by inserting them within solid layers having a controlled thickness by virtue of the presence of the polymeric mesh.

The invention will become better apparent with reference to the examples that follow, enclosed by way of non-limitative example. The examples shown here describe the preparation of the black PDLC film, describe the process for laminating the black PDLC film onto a rigid layer of Plexiglas or polycarbonate useful for the manufacture of the electrooptical fascia and, at the end, the electrooptical characterization of the fascia.

### Example 1

### Formulation and process of black PDLC film:

The formulation of the initial mixture of black PDLC for the fascia uses the prepolymer NOA65 (Norland Optical Adhesive, Norland Products, Inc., New Brunswick, NJ 08902 USA) in an amount of 505 by weight (wt%) and the liquid crystal TNO623 (Roche) in an amount of 25 wt%, mixed with a dichroic black coloring agent at 2.25 wt% with respect to the liquid crystal. The remaining part of the mixture is constituted by the liquid crystal known as Licrite TL213 at 25 wt% and the photoinitiator IRG819 at 2% with respect to the NOA65, which is meant to facilitate a more effective cross-linking of the polymer during UV irradiation. The curing of the film due to cross-linking provides mechanical strength, resistance to external agents, and stability over time. During the process for the formulation and manufacture of the black PDLC film, the thickness of the plate is kept constant and equal to 25 microns by virtue of spherical plastic spacers (Sekisui Fine Chemical Co. Ltd), which are dissolved in the mixture.

The method performed to achieve cross-linking is PIPS UV (Polymerization Induced Phase Separation UV-cured). The black PDLC film is prepared by dispersing the liquid crystal and the coloring agent in NOA65 prepolymer and other additives cited above. Then UV/visible irradiation is performed by means of a 36-W neon lamp and a mercury-vapor lamp with an absorption of 6.0 ampere. The PDLC thus cured is rigid and adheres to the support that contains it, which is constituted by two metallized layers of PET with a thickness of 175 microns each, which have, on the surface directly in contact with the PDLC, a conducting layer of ITO (indium and tin oxide) that is approximately 50 nm thick.

The temperature during the process is set to 40 °C, therefore below the transition temperature of the liquid crystal and such as to bring the refractive index of the prepolymer very close to the ordinary refractive index of the liquid crystal (matching condition). UV irradiation also is controlled well by virtue of the fact that the compound is passed at a constant speed of 5 meters/min below the lamp. These conditions ensure a product with clearly defined physical and electrooptical characteristics.

### Example 2

### Formulation and process of black PDLC film:

The formulation of the initial mixture of black PDLC for the fascia uses the epoxy resin EPON828 and the reactive diluent HELOXY, respectively 17.1 wt% and 9.1 wt%, the liquid crystals TNO623 (Roche) and TL213 (Merck) in a total amount of 40 wt%, mixed with a dichroic black coloring agent at 2.25 wt% with respect to the first liquid crystal. The remaining part of the mixture is constituted by the cross-linking agent CAPCURE at 33.8 wt%. During the process for manufacturing the black PDLC film, the thickness of the plate is kept constant and equal to 25 microns by virtue of spherical plastic spacers (Sekisui Fine Chemical Co. Ltd), which are dissolved in the mixture.

The method performed with this mixture in order to obtain cross-linking is PIPS TS (Polymerization Induced Phase Separation with Thermoset). The uniform mixture thus prepared is spread between the two conducting PET films in order to obtain a film that is cured by virtue of the cross-linking induced by permanence in a preheated stove. It is possible to modify the electrooptical properties of the film by varying the temp of the stove and the retention of the film therein.

### Example 3

### Formulation and process of black PDLC film:

The formulation of the initial mixture of black PDLC for the fascia uses the thermoplastic resin JONKRIL800 in an amount of 51 wt% and the liquid crystals GH1394 and CS2175 in an amount of 32.1 wt% and 2.6 wt% respectively, mixed with a black coloring agent. The remaining part of the mixture is constituted by the solvent ethyl acetate at 14.2 wt%. During the process for manufacturing the black PDLC film, the thickness of the plate is kept constant and equal to 25 microns by virtue of spherical plastic spacers (Sekisui Fine Chemical Co. Ltd), which are dissolved in the mixture.

The method performed with this mixture is SIPS (Solvent Induced Phase Separation). The resulting uniform mixture is spread on a single film of conductive PET and is introduced in a stove at a preset temperature. The curing obtained by virtue of the phase separation is induced by the evaporation of the solvent. It is possible to vary the electrooptical characteristics by modifying the evaporation times of the solvent.

### Example 4

### Manufacture of the electrooptical dark fascia:

The black PDLC film produced as explained in Examples 1, 2 and 3 has a total thickness of 375-380 microns, i.e., it includes the thickness of the PET conducting supports. It is flexible yet withstands fairly intense mechanical stresses. For applications, a lamination is required which allows to enclose it within a surface that protects it against scratches and makes it easy to carry and handle in order to be mounted on the supports of the black PDLC electrooptical fascia. These supports must be transparent in order to avoid altering the optical properties of the film: up to now the lamination tests we have conducted have used Plexiglas or glass supports.

The fascia was laminated on a rigid surface made of methyl methacrylate (Plexiglas) with a thickness of 0.5 cm, using a MAC-TAC double adhesive film applied with a FALCON LAMINATOR laminating machine with preheated rollers in a condition providing protection against dust.

### Example 5

### Manufacture of the electrooptical dark fascia:

The black PDLC film produced as explained in Examples 1, 2 and 3 has a total thickness of 375-380 microns, i.e., it includes the thickness of the PET conducting supports. It is flexible yet withstands fairly intense mechanical stresses. For applications, a lamination is required which allows to enclose it within a surface that protects it against scratches and makes it easy to carry and handle in order to be mounted on the supports of the black PDLC electrooptical fascia. These supports must be transparent in order to avoid altering the optical properties of the film: up to now the lamination tests we have conducted have used Plexiglas or glass supports.

The fascia was laminated on a rigid surface made of glass with a thickness of 0.6 cm, using a MAC-TAC double adhesive film applied with a FALCON LAMINATOR laminating machine with preheated rollers in a condition providing protection against dust.

### Example 6

### Electrooptical properties of the fascia:

Tables 1 and 2 list the electrooptical responses of the fascia prepared respectively as explained in Example 3 and in a standard preparation of an electrooptical fascia with PDLC without coloring agent. These tables aim to compare the electrooptical properties of the black PDLC electrooptical fascia and the white (milky-white) fascia obtained with PDLC without coloring agent (PDLC electrooptical fascia).

It can be noted that the introduction of the black coloring agent has a strong influence on light transmission, which is attenuated considerably by the fascia.

The measurements obtained were performed with a photometric device equipped with an integration sphere that allows to evaluate both total transmitted light and the light transmitted within a very narrow angular aperture (transmittance). Moreover, measurements were also taken at large angles that were clearly defined with respect to the direction of incidence of the incoming light, so as to obtain a characterization of the specimen also for viewpoints that are not fully frontal with respect to the surface of the film.

**Table 1**

| **Black PDLC electrooptical fascia** | | **Measurements with front incidence** | | | |
|---|---|---|---|---|---|
| Sinusoidal signal applied to filter | | Brightness | | Electrooptical properties of filter | |
| Vac(rms) | Hz | IN [Cd/mq] | OUT [Cd/mq] | Transmittance | Optical density |
| 0 | 50 | 3631 | 389.5 | 10.72707 | 0.969519 |
| 10 | 50 | 3631 | 421.2 | 11.60011 1 | 0.935538 |
| 13.8 | 50 | 3631 | 614 | 16.90994 | 0.771858 |
| 21 | 50 | 3631 | 852.5 | 23.47838 | 0.629332 |
| 31.1 | 50 | 3631 | 1068 | 29.41338 | 0.531455 |
| 43.1 | 50 | 3631 | 1223 | 33.68218 | 0.4726 |
| 56 | 50 | 3631 | 1300 | 35.80281 | 0.446083 |
| 141 | 50 | 3631 | 1473 | 40.56734 | 0.391824 |

**Table 2**

| **PDLC electrooptical fascia** | | **Measurements with front incidence** | | | |
|---|---|---|---|---|---|
| Sinusoidal signal applied to filter | | Brightness | | Electrooptical properties of filter | |
| Vac(rms) | Hz | IN [Cd/mq] | OUT [Cd/mq] | Transmittance | Optical density |
| 0 | 50 | 3345 | 2158 | 64.51 | 0.19 |
| 10 | 50 | 3345 | 2259 | 67.53 | 0.17 |
| 20 | 50 | 3345 | 2392 | 71.51 | 0.15 |
| 30 | 50 | 3345 | 2546 | 76.11 | 0.12 |
| 40 | 50 | 3345 | 2584 | 77.25 | 0.11 |
| 70 | 50 | 3345 | 2621 | 78.36 | 0.11 |
| 100 | 50 | 3345 | 2646 | 79.1 | 0.1 |
| 130 | 50 | 3345 | 2659 | 79.49 | 0.1 |
| 150 | 50 | 3345 | 2671 | 79.85 | 0.1 |

### Example 7

### Electrooptical properties of the fascia:

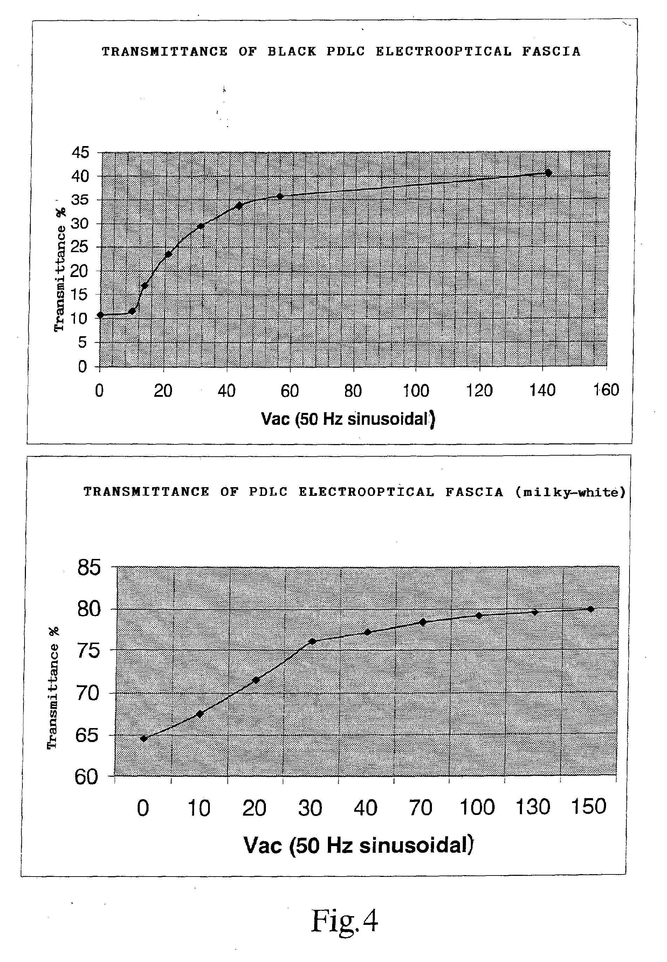

Figure 4 plots the electrooptical responses of the black PDLC electrooptical fascia, prepared as explained in Example 3, and the electrooptical responses of the PDLC electrooptical fascia prepared according to the standard formulation without the coloring agent. These responses seek to demonstrate the increase in contrast performance in the black PDLC fascia. It can be noted that light transmittance is attenuated considerably by the fascia.

### Example 8

### Electrooptical properties of the fascia:

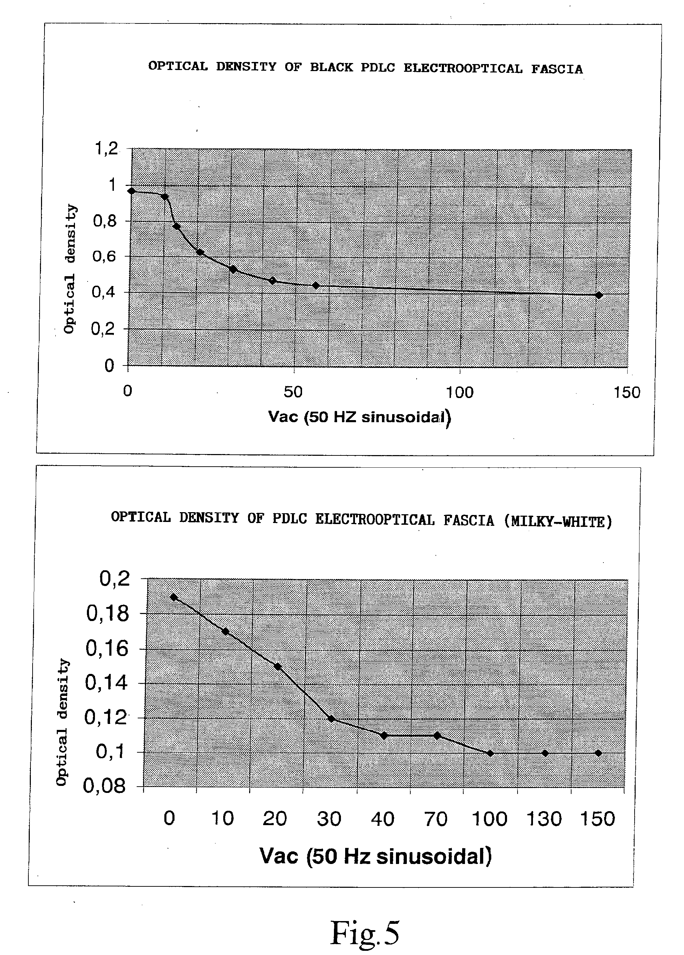

Figure 5 plots the electrooptical responses of the black PDLC electrooptical fascia, prepared as explained in Example 3, and of the PDLC electrooptical fascia prepared according to the standard preparation without the coloring agent. These responses seek to demonstrate the increase in contrast performance in the black PDLC electrooptical fascia. It can be noted that the optical density of the light is increased considerably by the formulation described in Example 3.

### Example 9

### Electrooptical properties of the fascia:

Tables 3 and 4 list the electrooptical responses of the black PDLC electrooptical fascia, prepared as explained in Example 3, and the electrooptical responses of the PDLC electrooptical fascia (milky-white). These responses seek to compare the light transmitted at various values of the applied voltage, also viewing from different angles. It can be noted that the introduction of the black coloring agent influences greatly the transmission of light at various viewing angles.

**Table 3**

| **Measurement of angle transmittance for various values of applied voltage and various viewing angles for the black PDLC electrooptical fascia** | | | |
|---|---|---|---|
| | V=60 volt | V=80 volt | V=100 volt |
| Angle | Transmittance | Transmittance | Transmittance |
| 0 | 38.0 | 43.1 | 45.2 |
| 15 | 37.0 | 41.8 | 44.5 |
| 30 | 31.4 | 36.5 | 39.4 |
| 45 | 19.1 | 23.1 | 25.5 |
| 60 | 9.5 | 11.5 | 12.9 |

**Table 4**

| **Measurement of angle transmittance for various values of applied voltage and various viewing angles for the PDLC electrooptical fascia (milky-white)** | | | |
|---|---|---|---|
| | V=60 volt | V=80 volt | V=100 volt |
| Angle | Transmittance | Transmittance | Transmittance |
| 0 | 66.5 | 67.8 | 68.5 |
| 15 | 64.1 | 66.4 | 67.2 |
| 30 | 57.4 | 60.8 | 59.8 |
| 45 | 43.5 | 48.1 | 50.9 |
| 60 | 27.2 | 30.6 | 32.7 |

### Example 10

### Electrooptical properties of the fascia:

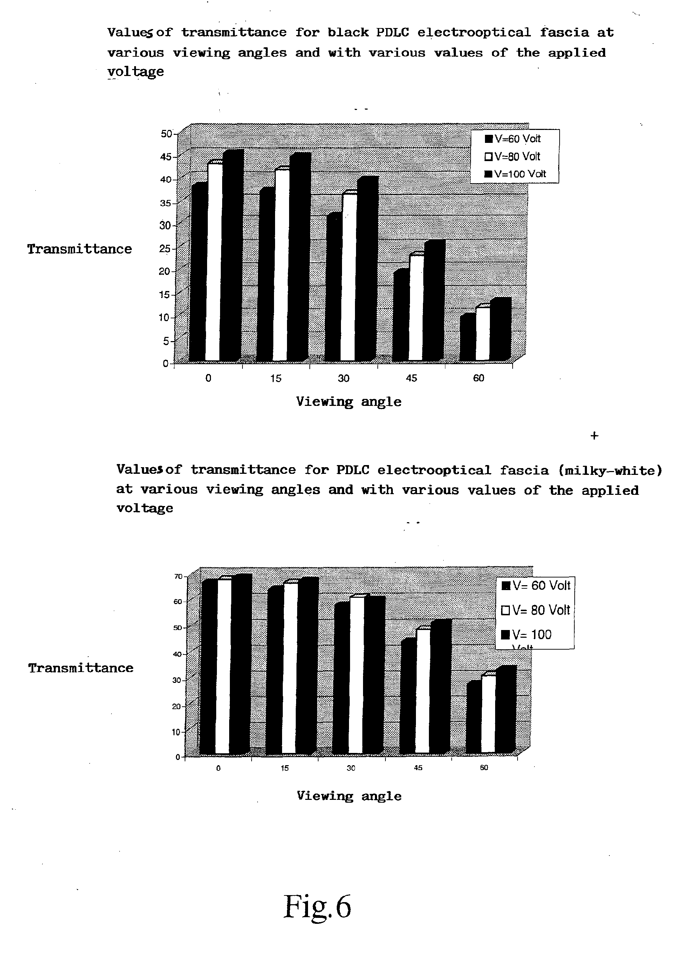

Figure 6 lists the electrooptical responses of the black PDLC electrooptical fascia, prepared as explained in Example 3, and the electrooptical responses of the PDLC electrooptical fascia (milky-white). These responses seek to compare the light transmitted at various values of the applied voltage, also viewing from different angles. It can be noted that the introduction of the black coloring agent influences greatly the transmission of light at various viewing angles.

### Example 11

### Electrooptical properties of the fascia:

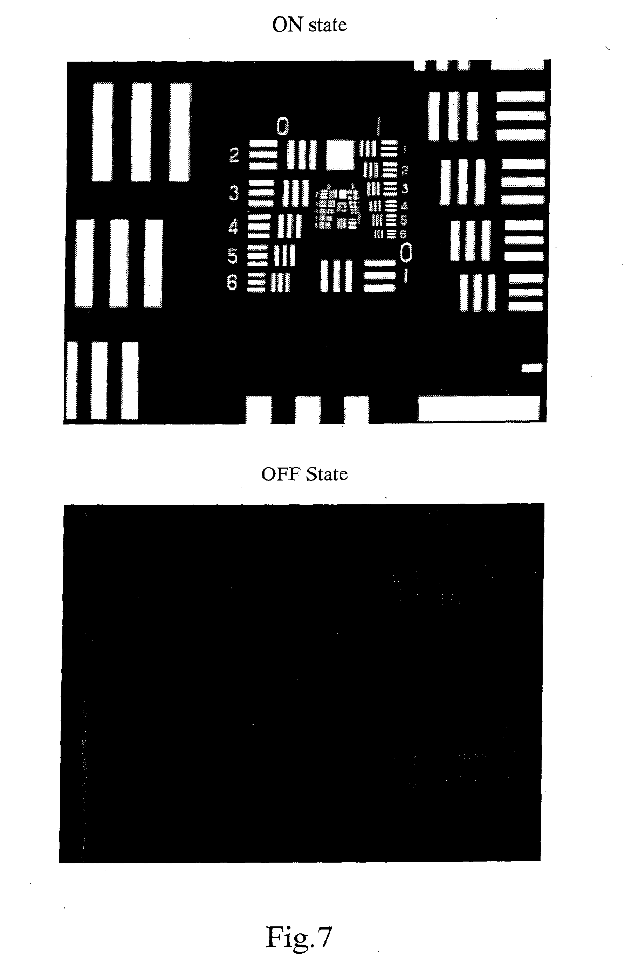

Figure 7 lists the electrooptical responses of the fascia prepared as explained in Example 3. These responses seek to highlight the obtainable optical resolution of the fascia in the two ON and OFF states. It can be noted that the introduction of the black PDLC allows a high contrast of the fascia in the ON state and an almost complete blacking out of the backlit image in the OFF state.

### Example 12

### Electrooptical properties of the fascia:

Table 5 lists the electrooptical responses of the fascia prepared as explained in Example 3. These responses seek to highlight the optical property, i.e., the total transparency in the ON state (Tₒₙ) and in the Off state (T_{off}), and the obtainable contrast of the fascia. It can be noted that the introduction of the black PDLC allows a high contrast of the fascia between the ON state and the OFF state.

**Table 5**

| **T**_{**off**} | **T**_{**on**} | **Contrast (T**_{**on**}**/T**_{**off**}**)** |
|---|---|---|
| 7.8 | 36 | 4.6 |

## Claims

1. An instrument panel of a vehicle, provided with a rigid front cover panel for protecting the underlying instruments, **characterized in that** said cover panel is electrooptical and comprises: two transparent conducting layers, a separate electrical contact for each one of said two conducting layers, and, interposed between said two conducting layers, a material chosen between:
i. a liquid crystal-based material and a coloring agent diffused in said liquid crystal-based material, and
ii. a liquid crystal-based coloring material;
so that said coloring agent can conceal said underlying instruments when inactive and can show them during excitation.

2. The instrument panel according to claim 1, comprising a rigid transparent layer, said two conducting layers being flexible.

3. The instrument panel according to claim 2, wherein a coupling between said rigid layer and a conducting layer is provided by virtue of an adhesive.

4. The instrument panel according to at least one of the preceding claims, wherein said rigid layer is made of polyacrylate.

5. The instrument panel according to at least one of the preceding claims, wherein said flexible layers are made of ITO or are based on polythiophene, polyanion, or an organic hydroxy or polyhydroxy compound.

6. The instrument panel according to at least one of the preceding claims, wherein said coloring agent has an organic base, preferably an organometallic base.

7. The instrument panel according to at least one of the preceding claims, wherein said coloring agent is liquid crystal-based so that said coloring agent also can undergo orientation during said excitation step.

8. The instrument panel according to at least one of the preceding claims, wherein said coloring agent includes a multiaromatic unit bonded to a metal.

9. The instrument panel according to at least one of the preceding claims, wherein said coloring agent has the formula:
R¹―R²―R³ (1)
where R¹ and R³ are identical or different fractions, each of which provides at least one covalently bonded aromatic group (aromatic groups include unsaturated heterocyclic structures), and R² contains a polyvalent metal bonded to R¹ and R³ by means of covalent, ionic or weaker bonding forces.

10. The instrument panel according to at least one of the preceding claims, wherein said liquid crystal-based material comprises a polymeric material and a liquid crystal chosen among PDLC, LCDP, PSLC.

11. The instrument panel according to at least one of the preceding claims, wherein said liquid crystal-based material has a microdroplet, microsphere or network morphology.

12. The instrument panel according to at least one of the preceding claims, wherein said liquid crystal is organic or organometallic with a mesogenic property of the nematic, cholesteric or smectic type.

13. A method for manufacturing an instrument panel that has an electrooptical liquid-crystal and polymer front cover panel that includes:
(a) providing a material chosen between:
i. a liquid crystal-based material and a coloring agent diffused in said liquid crystal-based material, a prepolymeric material and
ii. a coloring material based on liquid crystal and a prepolymeric material;
(b) making the mixture cure;
(c) forming an electrooptical film;
(d) bonding the electrooptical film onto a rigid layer of said cover panel by means of an adhesive.

14. The method according to claim 13, wherein said curing is performed by virtue of a method chosen among: ultraviolet radiation, solvent evaporation, cooling, heat and IR radiation.

15. The method according to claim 13 or 14, wherein said electrooptical film has a normal, inverse or network morphology.

16. The method according to at least one of claims 13 to 15, wherein said adhesive is a double adhesive.

17. The method according to at least one of claims 13 to 16, comprising the electrical activation of said cover panel.

18. Every new characteristic or new combination of characteristics described or illustrated herein.
